# EUROPEAN PATENT SPECIFICATION

(11) **EP 1 805 769 B1**
(45) Date of publication and mention of the grant of the patent: **30.12.2009**
(21) Application number: 05858425.1
(22) Date of filing: 20.09.2005
(51) Int. Cl.: G21C 3/62, G21C 3/64

(54) **MODIFIED NITRIDE FUEL FOR COMPACT AND LONG-LIFE REACTORS**
MODIFIZIERTER NITRIDBRENNSTOFF FÜR KOMPAKTE UND LANGLEBIGE REAKTOREN
COMBUSTIBLE A BASE DE NITRURE MODIFIE POUR REACTEURS COMPACTS ET A LONGUE DUREE DE VIE

(30) Priority: 22.10.2004 US 971170
(43) Date of publication of application: 11.07.2007
(73) Proprietor: The Regents of the University of California, Oakland, CA 94607-5200 (US)
(72) Inventor: EBBINGHAUS, Bartley, B., Livermore, CA 94550 (US); CHOI, Jor-shan, El Cerrito, CA 94530 (US); MEIER, Thomas, C., Livermore, CA 94550 (US)
(74) Representative: Ebner von Eschenbach, Jennifer
(86) International application number: PCT/US2005/033881
(87) International publication number: WO 2007/011382

(56) References cited:
- EP-A1- 0 676 771
- BE-A- 664 772
- GB-A- 1 062 765
- GB-A- 1 186 630
- US-A- 3 306 957
- US-A- 3 671 453
- US-A- 4 624 828

## Description

The United States Government has rights in this invention pursuant to Contract No. W-7405-ENG-48 between the United States Department of Energy and the University of California for the operation of Lawrence Livermore National Laboratory.

### BACKGROUND

### Field of Endeavor

The present invention relates to reactors and more particularly to modified nitride fuel for compact and long-life reactors.

### State of Technology

United States Patent No. 4,624,828 issued November 25, 1986 to Carl A. Alexander and assigned to Battelle Memorial Institute provides the following state of technology information, "In recent years endeavors have been made to find a nuclear fuel which is compact and produces high temperatures. Such a fuel is of particular value in a nuclear reactor for use in outer space. It is impractical to use metallic uranium for a fuel in such a reactor. This is because of its low melting point and phase changes. Alternative proposals to build stabilized fuels for fast breeder reactors have centered upon the use of uranium dioxide, uranium carbide, and uranium nitride. Also corresponding compounds of thorium, plutonium, or a combination of these elements with uranium fuels have been used. Compatibility is a consideration involved with the selection of any nuclear fuel. The fuel itself must be compatible with the cladding material in which it is contained. The fuel must also be compatible with any materials added to it, such as refractory metals. The addition of a non-compatible element to the fuel may prevent the formation of a satisfactory cermet. For example, carbide nuclear fuels have very limited compatibility with all common materials at elevated temperatures. Another example of incompatibility is present in a composition of uranium mononitride with calcium nitride. The physical properties of this material initially appear to be within the parameters identified for this invention as being required to stabilize a uranium mononitride fuel. However, this material, unlike the nitrides of many transition metals, prevents the formation of a satisfactory cermet with uranium mononitride. Consideration of a material's thermal conductivity compatibility must also be made. Those materials that transfer heat by conduction through electrons have increased thermal conductivity and are preferred over materials that transfer heat primarily by phonon induction. Increased thermal conductivity improves the utility of a nuclear fuel Uranium dioxide (UO₂) is a very forgiving material. Without problems of significant corrosion to cladding materials or deterioration of cermet formation, it has been shown to be compatible with stainless steels, refractory metals, and even other ceramics. It is relatively stable and easy to fabricate. It possesses a complex vapor phase and has nearly the poorest thermal conductivity of any potential nuclear fuel. It can be operated for extended periods of time, but only at low temperatures. At high temperatures its operational time is greatly decreased." (Col.1, lines 11-59, U. S. Patent No. 4,624,828)

### SUMMARY

Features and advantages of the present invention will become apparent from the following description. Applicants are providing this description, which includes examples of specific embodiments, to give a broad representation of the invention. scope of the invention is not intended to be limited to the particular forms disclosed and the invention covers all modifications, equivalents, and alternatives falling within the spirit and scope of the invention as defined by the claims.

The present invention provides a fuel element for a nuclear reactor. The fuel element comprises a modified nitride uranium or modified nitride plutonium fuel and additives that enhance properties of the modified nitride uranium or modified nitride plutonium fuel. The additives include hafnium nitride. In various embodiments nitride additives enhance compactness, long-life, proliferation resistance, fuel safety, and waste management of the fuel element. In various embodiments of the fuel element of the present invention the additives include hafnium nitride and comprise at least one of zirconium nitride, thorium nitride, titanium nitride, rare earth nitrides, or other actinide nitrides.

The present invention also provides a method of making a fuel element for a nuclear reactor. The method comprises providing a modified nitride uranium or modified nitride plutonium fuel and adding nitrides to the nuclear fuel to enhance compactness, long-life, proliferation resistance, fuel safety, and waste management properties of the nuclear fuel. In various embodiments of the present invention the step of adding nitrides to the nuclear fuel comprises adding hafnium nitride and at least one of zirconium nitride, thorium nitride, titanium nitride, or rare earth nitrides to the fuel element.

The invention is susceptible to modifications and alternative forms. Specific embodiments are shown by way of example. It is to be understood that the invention is not limited to the particular forms disclosed. The invention covers all modifications, equivalents, and alternatives falling within the spirit and scope of the invention as defined by the claims.

### BRIEF DESCRIPTION OF THE DRAWINGS

The accompanying drawings, which are incorporated into and constitute a part of the specification, illustrate specific embodiments of the invention and, together with the general description of the invention given above, and the detailed description of the specific embodiments, serve to explain the principles of the invention.
FIG. 1 shows one embodiment of a fuel rod with UN fuel with additives to enhance fuel properties.
FIG. 2 is a cross section view of the fuel rod shown in figure 1.

### DETAILED DESCRIPTION OF THE INVENTION

Referring to the following detailed description, and to incorporated materials, detailed information about the invention is provided including the description of specific embodiments. The detailed description serves to explain the principles of the invention. The invention is susceptible to modifications and alternative forms. The invention is not limited to the particular forms disclosed. The invention covers all modifications, equivalents, and alternatives falling within the spirit and scope of the invention as defined by the claims.

Nuclear energy currently supplies twenty percent of the electricity used in the United States and sixteen percent of the electricity used throughout the world. As the global use of nuclear energy grows, so do concerns about the vulnerability of nuclear plants and fuel materials to misuse or attacks by terrorists. A Lawrence Livermore National Laboratory team is part of a Department of Energy (DOE) collaboration that is addressing both the growing need for nuclear energy and the concern over nuclear proliferation by pursuing a concept called Small, Sealed, Transportable, Autonomous Reactor (SSTAR). SSTAR is designed to be a self-contained reactor in a tamper-resistant container. The goal is to provide reliable and cost-effective electricity, heat, and freshwater. The design can also be used to produce hydrogen for use as an alternative fuel for passenger cars.

The SSTAR concept reduces the potential for a terrorist to divert or misuse the nuclear materials and technology. Nuclear fuel will be contained within the sealed, tamper-resistant reactor vessel when it is shipped to its destination, and the spent reactor core will be returned to the supplier for recycling. SSTAR addresses proliferation concerns with other features as well. No refueling is necessary during the reactor's operation, which eliminates access to and long-term storage of nuclear materials on-site. The design also includes detection and signaling systems to identify actions that threaten the security of the reactor. And because of the reactor's small size and its thermal and nuclear characteristics, the design can include a passive method to shut down and cool the reactor in response to hardware or control failures. With fast-moving neutrons, SSTAR could produce the fissile material it needs to fuel continued operation at the same time that it generates energy. Spent fuel in the form of uranium and plutonium would remain in the reactor to generate power for up to 30 years. The spent reactor would then be returned to a secure recycling facility to close the fuel cycle and to minimize the high-level wastes generated by nuclear reactors, thus reducing the space and infrastructure needed for the long-term storage of radioactive wastes. The concept for recycling is to have almost all of the waste burned in the reactor's core.

Materials for the fuel and coolant boundary in the SSTAR concept must be compatible with the coolant. Lead, especially when alloyed with bismuth, tends to corrode the fuel cladding and structural steel. Controlling the oxygen in the coolant will help reduce corrosion. In addition, materials that best withstand the damaging effects of long-term exposure to fast neutrons must be used. Structural damage could include material swelling and ductility loss, both of which may limit the life of the reactor.

The present invention provides UN or (U,Pu)N fuel produced with additives to enhance fuel properties. The enhanced properties include thermal conductivity, thermodynamic stability, and neutron capture properties. The additives include HfN and TiN, ZrN, ThN, rare earth nitrides, and other actinide nitrides. The enhanced properties lead to potential benefits in the compactness of the reactor design, the life of the reactor, the proliferation resistance both before and after irradiation, the fuel safety, and the waste management of the spent fuel. The enhanced properties are useful for security, such as sealed and long-life fuels, integral instrumentation and control, and specialized detection and signaling systems will be incorporated to minimize the risk of diversion of nuclear materials. The present invention has uses in the SSTAR and other small, compact, and long-life reactors.

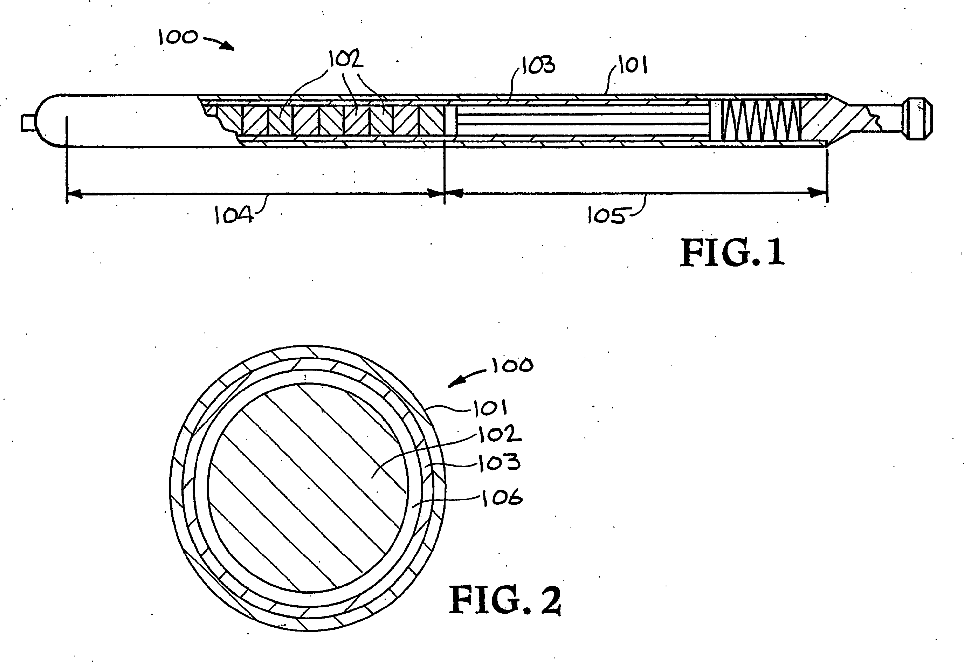

Referring to FIG. 1, an embodiment of a fuel rod system incorporating the present invention is illustrated. The system is designated generally by the reference numeral 100. The system 100 includes UN or PuN fuel 102 produced with additives to enhance fuel properties. The system 100 includes a fuel section 104 and a plenum section 106. A cladding 101 encompasses the fuel rod system 100. The fuel rod system 100 includes a liner 103 that provides a chemical barrier. The UN or PuN fuel 102 is in the form of pellets.

Referring to FIG. 2, a cross section view of the fuel rod of FIG. 1 is shown. The fuel rod system 100 includes a liner 103 that provides a chemical barrier. The cladding 101 surrounds the liner 103. The UN or PuN fuel 102 is in the form of pellets. A helium filled gas gap 106 is located between the liner 103 and the fuel pellets 102.

The UN or PuN fuel 102 comprises a modified nitride uranium or modified nitride plutonium fuel and additives that enhance properties of the modified nitride uranium or modified nitride plutonium fuel. The additives include hafnium nitride. In various embodiments nitride additives enhance compactness, long-life, proliferation resistance, fuel safety, and waste management of the fuel element. In various embodiments of the fuel element of the present invention the additives include hafnium nitride and comprise at least one of zirconium nitride, thorium nitride, titanium nitride, or rare earth nitrides.

Embodiments of the modified nitride-based uranium or plutonium fuel (UN or PuN) fuel 102 has been produced at the Lawrence Livermore National Laboratory by carbothermic reduction of oxides in a controlled glovebox environment. The modified nitride-based uranium or plutonium fuel of these embodiments includes additives to enhance five individual properties. The five individual properties are: (1) compactness, (2) long-life, (3) proliferation resistance, (4) fuel safety, and (5) waste management. The uranium or plutonium mono-nitride fuel of these embodiments has uses in the SSTAR and other small, compact, and long-life reactors.
(1) Compactness - The enhanced properties of the uranium or plutonium mono-nitride fuel of these embodiments provide compactness. Higher density of the fissionable isotope (²³⁵U) provides a more compact reactor because the critical mass will be smaller. A smaller core will yield more heat per unit area and higher thermal conductivity of the fuel will be required to get the heat out of the system and maintain an acceptable centerline temperature of the fuel. The composition of the fuel is modified to increase the thermal conductivity without decreasing the density of the ²³¹U in the fuel or affecting the stability of the fuel, a more compact reactor design.
(2) Long-life - Long-life is obtained largely by the reactor design. But fuel composition can also affect the life favorably or unfavorably. The favorable features are:
   - High fissile loading (i.e., high ²³⁵U enrichment in UN, or high ²³⁹Pu content in (U,Pu)N)
   - Presence of ²³²Th or ²³⁸U which are converted during irradiation into ²³³U-rich uranium and ²³⁹Pu-rich plutonium, respectively
   - Low cladding strain which is dependent upon the fuel centerline temperature and the radiation effects on the fuel and cladding materials
   - Presence of burnable neutron poisons in the fuel

Proliferation concerns limit the ²³⁵U enrichment and cladding strain caused by radiation effects. Since the SSTAR is a fast spectrum reactor with peak neutron energy between 0.2 and 0.3 MeV, the use of burnable poisons will be considerably less effective than in thermal spectrum reactors. The neutron absorption cross sections of various elements at a neutron energy of 0.1 and 0.5 MeV are relatively low, even for many elements that are normally identified as good neutron poisons. Of all these elements, Eu is the best neutron poison in this energy regime, and Hf, Sm, Gd, and Dy are all considerably better than average neutron poisons. The fission cross sections of some of the actinides show that the fission cross section of ²³⁵U and ²³⁹PuN are roughly the same as Eu and about a factor of four higher than Hf, Sm, Gd, and Dy. Therefore, the rate of neutron capture by one of the burnable poisons will be a little less but still comparable to the rate of fission of the ²³⁵U. Even though the neutron absorption cross sections are relatively low in this energy regime, burnable poisons could still lengthen fuel life significantly.
(3) Proliferation Resistance - Proliferation resistance is ensured primarily by the reactor design, but composition of the fuel is also a significant consideration. To ensure that the uranium in the fresh fuel is not attractive for use in nuclear weapons, the ²³5U enrichment is limited to 20%. The fresh fuel is made even less attractive for diversion by the addition of other inert materials that are not readily separated from UN. Addition of inert materials that are harder than UN to dissolve in aqueous solutions enhances the proliferation resistance. Once the material is dissolved in solution, a PUREX-like purification process will provide good separation of the actinides from the other inert materials.

Proliferation resistance is a consideration in the spent nuclear fuel, especially if the fuel will be reprocessed. If there is ²³²Th or ²³⁸U in the fresh fuel, the irradiation will lead to ²³³U-rich or ²³⁹Pu-rich weapons useable material in the spent fuel. The attractiveness of the Pu is reduced, but not eliminated, by the presence of higher enrichments of ²³⁵U in the fresh fuel. Under irradiation, ²³⁷ Np and to a lesser extent ²³⁵U are eventually converted into to ²³⁸Pu. The attractiveness of the plutonium in the irradiated fuel is also reduced, but not eliminated, by longer irradiation times, e.g., higher burnups. The long irradiation cycle (as supported by the long life of the reactor fuel) will render the spent fuel with a higher percentage of ²⁴⁰Pu and ²⁴²Pu.

Overall, the attractiveness of the fresh fuel is reduced very little by additions of other nitrides to the UN fuel, and the attractiveness of the spent fuel is reduced some by minimizing the ²³⁸U content relative to the ²³⁵U content as long as the ²³⁵U enrichment is kept below 20%.
(4) Fuel Safety - For nitride fuel and cladding, the relevant criteria for fuel safety are:
   - Fission gas release and retention
   - Fuel pellet cladding interaction
   - Radiation swelling effects
   - Fuel centerline temperature

In general, the attainable burn-up and thus operating life of nuclear fuels are limited by materials performance issues, which result from changes in the thermal and mechanical properties and dimensional stability of the fuel pellets, cladding and structural materials during neutron irradiation. The development of modified nitride fuel provides improved materials and design approaches in order to reach higher burn-ups.

The effects of fission gas build-up can be mitigated by the fuel pin design. If the density of the fuel is low enough that the porosity is open, usually around 95% of theoretical or less, the fission gases will be able to diffuse out of the fuel and collect in the gaps at the ends of the fuel pins. Modification of the fuel composition is not a benefit or detriment in this respect. The stability of the fuel with the cladding is dependent upon the thermodynamic stability, compatibility of the materials, the fuel temperature, and radiation induced swelling effects.

The temperatures where oxidation of the nitride powder begins and the temperature at which the powder ignites is important. For bulk solids, these temperatures will of course be much higher. Data shows that additions of any of the nitrides except PuN will benefit the oxidation resistance and possibly simplify considerably the handling of the material. The best nitrides to add to the fuel matrix are dearly ZrN and HfN.

In regards to interaction with the cladding some thermodynamic calculations can be performed to see if the nitrides are stable with respect to the cladding materials, which are taken to be a zirconium-rich alloy (normally for heavy and light water reactors), a niobium-rich alloy (normally for space reactors), or a iron-based alloy (normally for liquid metal reactors). These calculations show that these additives significantly increase the stability of the modified nitride fuel with respect to the fuel element cladding.
(5) Waste Management - Waste management is a complicated issue with spent nuclear fuel. If the fuel is to be used in a once through cycle and disposed of directly, it will be important that the fuel is stable for thousands of years in an underground repository. If the fuel is to be used in a close cycle, it will be important that the fuel can be easily purified and reused.

For an open once through fuel cycle, the spent fuel will eventually need to be disposed of in an underground repository. Since the components in the fuel will not be reused, it is best from a proliferation point of view to dispose of the fuel directly and not separate the fission products from the actinides thus making them attractive for theft or diversion. Nitrides are more reactive than oxides so the case for direct disposal may be more difficult. Addition of nitrides except PuN to the UN fuel will significantly stabilize the fuel making it more stable with respect to water and more resistant to oxidation. Thus, it is a significant advantage from the waste management point of view for a direct disposal option to add TiN, ZrN, HfN, or ThN to the UN fuel.

For a closed fuel cycle involving reprocessing and reuse of the nuclear materials, the ease of dissolution and purification is an important factor from a waste management point of view. HfN and ZrN appear to be a little harder to dissolve than UN. Thus additions of these nitrides might complicate the purification and reuse of the spent nuclear fuel. Hard to dissolve materials will generally require more complex processing and more wastes will be generated.

Overall, it is an advantage to add ZrN or HfN to the fuel rather than use pure UN. There appears to be more support in the U.S. for once through open fuel cycles. In the long-term, as the cost of fuel and waste disposal becomes more expensive, closed cycles will likely become more attractive. In a closed cycle, addition of ZrN or HfN to the fuel may complicate the dissolution and purification process.

In a closed cycle, long lived actinide wastes (namely NpN and AmN) can be dispositioned in the fuel. In the case of ²³⁷ Np, it is converted to ²³⁸ Pu during irradiation, thus making the overall Pu isotopic composition of the fuel less desirable for weapons use.

In various embodiments of the present invention nitride additives enhance compactness, long-life, proliferation resistance, fuel safety, and waste management of the fuel element. Examples of the various embodiments of the fuel element of the present invention will now be described. In the various examples the additives comprise at least one of zirconium nitride, thorium nitride, hafnium nitride, titanium nitride, rare earth nitrides, or other actinide nitrides.

### Example 1

A modified nitride-based uranium fuel has been produced at the Lawrence Livermore National Laboratory by carbothermic reduction of oxides in a controlled glovebox environment. The modified nitride-based uranium fuel of Example 1 comprises ten percent uranium-235 (10% ²³⁵UN), forty percent zirconium nitride (40% ZrN), ten percent hafnium nitride (10% HfN), and forty percent uranium-238 (40% ²³⁸UN). The modified nitride-based uranium fuel of Example 1 or variants of Example 1 can be used by fuel fabricators that are not authorized to handle ²³³U or Pu (i.e., most companies) and who wish to make a nitride fuel that is suitable for use in heavy or light water reactors (i.e., resistant to reaction with water).

The enhanced properties of the modified uranium mono-nitride fuel in Example 1 lead to potential benefits in the compactness of the reactor design, the life of the reactor, the proliferation resistance both before and after irradiation, the fuel safety, and the waste management of the spent fuel. The enhanced properties are useful for security, such as sealed and long-life fuels, integral instrumentation and control, and specialized detection and signaling systems will be incorporated to minimize the risk of diversion of nuclear materials. The modified uranium mono-nitride fuel in Example 1 has uses in the SSTAR and other small, compact, and long-life reactors.

The enhanced properties of the modified uranium mono-nitride fuel of Example 1 provide compactness. Higher density of the fissionable isotope (²³⁵U) provides a more compact reactor because the critical mass will be smaller. A smaller core will yield more heat per unit area and higher thermal conductivity of the fuel will be required to get the heat out of the system and maintain an acceptable centerline temperature of the fuel. The composition of the fuel is modified to increase the thermal conductivity without decreasing the density of the ²³⁵U in the fuel or affecting the stability of the fuel, a more compact reactor design.

### Example 2

Another example of a modified nitride-based fuel for a nuclear reactor has been produced at the Lawrence Livermore National Laboratory by carbothermic reduction of oxides in a controlled glovebox environment. The modified nitride-based fuel of Example 2 comprises ten percent plutonium (10% ²³⁵Pu), ten percent zirconium nitride (10% ZrN), ten percent hafnium nitride (10% HfN), and seventy percent uranium-238 (70% ²³⁸UN). The enhanced properties of the mono-nitride fuel of Example 2 or variants of the mono-nitride fuel of Example 2 can be used by countries that are interested in reprocessing the spent fuel and recovering and using the Pu.

### Example 3

Another example of a modified nitride-based fuel for a nuclear reactor has been produced at the Lawrence Livermore National Laboratory by carbothermic reduction of oxides in a controlled glovebox environment. The modified nitride-based fuel of Example 3 comprises a mixture of ten percent of uranium-233/ uranium-235, seventy percent thorium nitride (70% ThN), ten percent zirconium nitride (10% ZrN), ten percent hafnium nitride (10% HfN). The enhanced properties of the mono-nitride fuel of Example 3 or variants of the mono-nitride fuel of Example 3 can be used be used by countries with abundant Th resources and are interested in reprocessing the spent fuel and recovering and using the ²³³U.

### Example 4

Another example of a modified nitride-based fuel for a nuclear reactor has been produced at the Lawrence Livermore National Laboratory by carbothermic reduction of oxides in a controlled glovebox environment. The modified nitride-based fuel of Example 4 comprises ten percent plutonium (10% ²³⁵Pu), seventy percent zirconium nitride (70% ZrN), ten percent hafnium nitride (10% HfN), and ten percent neptunium nitride (10% NpN) or ten percent americium nitride (10% AmN). The enhanced properties of the mono-nitride fuel of Example 4 or variants of the mono-nitride fuel of Example 4 can be used to disposition plutonium. The resulting fuel would be high in ²³⁸Pu, ²⁴¹Pu, and ²⁴²Pu. The Np and Am would also be consumed. (0036) The invention is susceptible to various modifications and alternative forms. Specific embodiments have been shown by way of example in detail herein. It is to be understood that the invention is not intended to be limited to the particular forms disclosed. Rather, the invention is to cover all modifications, equivalents, and alternatives falling within the scope of the invention as defined by the following appended claims.

## Claims

1. A fuel element for a nuclear reactor, comprising:
a modified nitride uranium or modified nitride plutonium fuel; and
additives that enhance properties of said modified nitride uranium or modified nitride plutonium fuel, said additives including hafnium nitride.

2. The fuel element of claim 1 wherein said nuclear fuel comprises ten percent uranium-235 and said additives comprise forty percent zirconium nitride and ten percent hafnium nitride, and including forty percent uranium-238.

3. The fuel element of claim 1 wherein said nuclear fuel comprises ten percent plutonium and said additives comprise ten percent zirconium nitride and ten percent hafnium nitride, and including seventy percent uranium-238.

4. The fuel element of claim 1 wherein said nuclear fuel comprises ten percent of a mixture of uranium-233 and uranium-235 and said additives comprise seventy percent thorium nitride, ten percent zirconium nitride, and ten percent hafnium nitride.

5. The fuel element of claim 1 wherein said nuclear fuel comprises ten percent plutonium and said additives comprise seventy percent zirconium nitride, ten percent hafnium nitride, and ten percent neptunium nitride or ten percent americium nitride.

6. A fuel element for a nuclear reactor, comprising:
nuclear fuel, said nuclear fuel comprising modified nitride uranium or modified nitride plutonium fuel; and
additive means including hafnium nitride.

7. The fuel element of claim 6 wherein said nuclear fuel comprises ten percent uranium-235 and said additive means comprise forty percent zirconium nitride and ten percent hafnium nitride, and including forty percent uranium-238.

8. The fuel element of claim 6 wherein said nuclear fuel comprises ten percent plutonium and said additive means comprise ten percent zirconium nitride and ten percent hafnium nitride, and including seventy- percent uranium-238.

9. The fuel element of claim 6 wherein said nuclear fuel comprises ten percent of a mixture of uranium-233 and uranium-235 and said additive means comprise seventy percent thorium nitride, ten percent zirconium nitride, and ten percent hafnium nitride.

10. The fuel element of claim 6 wherein said nuclear fuel comprises ten percent plutonium and said additive means comprise seventy percent zirconium nitride, ten percent hafnium nitride, and ten percent neptunium nitride or ten percent americium nitride.

11. A method of making a fuel element for a nuclear reactor, comprising:
providing a nuclear fuel comprising modified nitride uranium or modified nitride plutonium fuel; and
adding nitrides including hafnium nitride to said nuclear fuel.

12. The method of making a fuel element of claim 11 wherein said nuclear fuel comprises ten percent uranium-235 and including forty percent uranium-238, and said step of adding nitrides to said nuclear fuel comprises adding forty percent zirconium nitride and ten percent hafnium nitride to said fuel element.

13. The method of making a fuel element of claim 11 wherein said nuclear fuel comprises ten percent plutonium and including seventy percent uranium-238, and said step of adding nitrides to said nuclear fuel comprises adding ten percent zirconium nitride and ten percent hafnium nitride to said fuel element.

14. The method of making a fuel element of claim 11 wherein said nuclear fuel comprises ten percent of a mixture of uranium-233 and uranium- 235 and said step of adding nitrides to said nuclear fuel comprises adding seventy percent thorium nitride, ten percent zirconium nitride, and ten percent hafnium nitride to said fuel element.

15. The method of making a fuel element of claim 11 wherein said nuclear fuel comprises ten percent plutonium and said step of adding nitrides to said nuclear fuel comprises adding seventy percent zirconium nitride, ten percent hafnium nitride, and ten percent neptunium nitride or ten percent americium nitride said fuel element.

## Patentansprüche

1. Brennstoffelement für einen Kernreaktor, aufweisend:
einen modifizierten Nitrid/Uran- oder modifizierten Nitrid/Plutonium-Brennstoff und
Additive, welche die Eigenschaften des modifizierten Nitrid/Uran- oder modifizierten Nitrid/Plutonium-Brennstoffes verbessern, wobei die Additive Hafniumnitrid einschließen.

2. Brennstoffelement nach Anspruch 1, wobei der Kernbrennstoff zehn Prozent Uran-235 aufweist und wobei die Additive vierzig Prozent Zirconiumnitrid und zehn Prozent Hafniumnitrid aufweisen und einschließend vierzig Prozent Uran-238.

3. Brennstoffelement nach Anspruch 1, wobei der Kernbrennstoff zehn Prozent Plutonium aufweist und wobei die Additive zehn Prozent Zirconiumnitrid und zehn Prozent Hafniumnitrid aufweisen und einschließend siebzig Prozent Uran-238.

4. Brennstoffelement nach Anspruch 1, wobei der Kernbrennstoff zehn Prozent einer Mischung von Uran-233 und Uran-235 aufweist und wobei die Additive siebzig Prozent Thoriumnitrid, zehn Prozent Zirconiumnitrid und zehn Prozent Hafniumnitrid aufweisen.

5. Brennstoffelement nach Anspruch 1, wobei der Kernbrennstoff zehn Prozent Plutonium aufweist und wobei die Additive siebzig Prozent Zirconiumnitrid, zehn Prozent Hafniumnitrid und zehn Prozent Neptuniumnitrid oder zehn Prozent Americiumnitrid aufweisen.

6. Brennstoffelement für einen Kernreaktor, aufweisend:
Kernbrennstoff, wobei der Kernbrennstoff modifizierten Nitrid/Uran- oder modifizierten Nitrid/Plutonium-Brennstoff aufweist, und
Additivmittel Hafniumnitrid einschließen.

7. Brennstoffelement nach Anspruch 6, wobei der Kernbrennstoff zehn Prozent Uran-235 aufweist und wobei die Additive vierzig Prozent Zirconiumnitrid und zehn Prozent Hafniumnitrid aufweisen und einschließend vierzig Prozent Uran-238.

8. Brennstoffelement nach Anspruch 6, wobei der Kernbrennstoff zehn Prozent Plutonium aufweist und wobei die Additivmittel zehn Prozent Zirconiumnitrid und zehn Prozent Hafniumnitrid aufweisen und einschließend siebzig Prozent Uran-238.

9. Brennstoffelement nach Anspruch 6, wobei der Kernbrennstoff zehn Prozent einer Mischung von Uran-233 und Uran-235 aufweist und wobei die Additivmittel siebzig Prozent Thoriumnitrid, zehn Prozent Zirconiumnitrid und zehn Prozent Hafniumnitrid aufweisen.

10. Brennstoffelement nach Anspruch 6, wobei der Kernbrennstoff zehn Prozent Plutonium aufweist und wobei die Additivmittel siebzig Prozent Zirconiumnitrid, zehn Prozent Hafniumnitrid und zehn Prozent Neptuniumnitrid oder zehn Prozent Americiumnitrid aufweisen.

11. Verfahren zum Herstellen eines Brennstoffelements für einen Kernreaktor, welches Verfahren umfasst:
Bereitstellen eines Kernbrennstoffes, der modifizierten Nitrid/Uran- oder modifizierten Nitrid/Plutonium-Brennstoff aufweist, sowie
Hinzufügen von Nitriden, einschließend Hafniumnitrid, zu dem Kernbrennstoff.

12. Verfahren zum Herstellen eines Brennstoffelements nach Anspruch 11, wobei der Kernbrennstoff zehn Prozent Uran-235 aufweist, einschließend vierzig Prozent Uran 238, und wobei der Schritt des Hinzufügens von Nitriden zu dem Kernbrennstoff das Hinzufügen von zehn Prozent Zirconiumnitrid und zehn Prozent Hafniumnitrid zu dem Brennstoffelement umfasst.

13. Verfahren zum Herstellen eines Brennstoffelements nach Anspruch 11, wobei der Kernbrennstoff zehn Prozent Plutonium aufweist, einschließend siebzig Prozent Uran-238, und wobei der Schritt des Hinzufügens von Nitriden zu dem Kernbrennstoff das Hinzufügen von zehn Prozent Zirconiumnitrid und zehn Prozent Hafniumnitrid zu dem Brennstoffelement umfasst.

14. Verfahren zum Herstellen eines Brennstoffelements nach Anspruch 11, wobei der Kernbrennstoff zehn Prozent einer Mischung von Uran-233 und Uran-235 aufweist und wobei der Schritt des Hinzufügens von Nitriden zu dem Kernbrennstoff das Hinzufügen von siebzig Prozent Thoriumnitrid, zehn Prozent Zirconiumnitrid und zehn Prozent Hafniumnitrid zu dem Brennstoffelement umfasst.

15. Verfahren zum Herstellen eines Brennstoffelements nach Anspruch 11, wobei der Kernbrennstoff zehn Prozent Plutonium aufweist und wobei der Schritt des Hinzufügens von Nitriden zu dem Kernbrennstoff das Hinzufügen von siebzig Prozent Zirconiumnitrid, zehn Prozent Hafniumnitrid und zehn Prozent Neptuniumnitrid oder Americiumnitrid zu dem Brennstoffelement umfasst.

## Revendications

1. Elément de combustible pour un réacteur nucléaire, comprenant:
un combustible à base de nitrure d'uranium modifié ou de nitrure de plutonium modifié; et
des additifs qui renforcent les propriétés dudit combustible à base de nitrure d'uranium modifié ou de nitrure de plutonium modifié, lesdits additifs incluant le nitrure d'hafnium.

2. Elément de combustible selon la revendication 1, dans lequel ledit combustible nucléaire comprend dix pour cent d'uranium-235, et lesdits additifs comprennent quarante pour cent de nitrure de zirconium et dix pour cent de nitrure d'hafnium, et incluant quarante pour cent d'uranium-238.

3. Elément de combustible selon la revendication 1, dans lequel ledit combustible nucléaire comprend dix pour cent de plutonium, et lesdits additifs comprennent dix pour cent de nitrure de zirconium et dix pour cent de nitrure d'hafnium, et incluant soixante dix pour cent d'uranium-238.

4. Elément de combustible selon la revendication 1, dans lequel ledit combustible nucléaire comprend dix pour cent d'un mélange d'uranium-233 et d'uranium-235, et lesdits additifs comprennent soixante-dix pour cent de nitrure de thorium, dix pour cent de nitrure de zirconium et dix pour cent de nitrure d'hafnium.

5. Elément de combustible selon la revendication 1, dans lequel ledit combustible nucléaire comprend dix pour cent de plutonium, et lesdits additifs comprennent soixante dix pour cent de nitrure de zirconium, dix pour cent de nitrure d'hafnium et dix pour cent de nitrure de neptunium ou dix pour cent de nitrure d'americium.

6. Elément de combustible pour un réacteur nucléaire, comprenant:
le combustible nucléaire, ledit combustible nucléaire comprenant du combustible à nitrure d'uranium modifié ou à nitrure de plutonium modifié; et
des moyens d'addition incluant du nitrure d'hafnium.

7. Elément de combustible selon la revendication 6, dans lequel ledit combustible nucléaire comprend dix pour cent d'uranium-235, et lesdits moyens d'addition comprennent quarante pour cent de nitrure de zirconium et dix pour cent de nitrure d'hafnium, et incluant quarante pour cent d'uranium-238.

8. Elément de combustible selon la revendication 6, dans lequel ledit combustible nucléaire comprend dix pour cent de plutonium, et lesdits moyens d'addition comprennent dix pour cent de nitrure de zirconium et dix pour cent de nitrure d'hafnium, et incluant soixante-dix pour cent d'uranium-238.

9. Elément de combustible selon la revendication 6, dans lequel lendit combustible nucléaire comprend dix pour cent d'un mélange d'uranium-233 et d'uranium-235, et lesdits moyens d'addition comprennent soixante-dix pour cent de nitrure de thorium, dix pour cent de nitrure de zirconium et dix pour cent de nitrure d'hafnium.

10. Elément de combustible selon la revendication 6, dans lequel ledit combustible nucléaire comprend dix pour cent de plutonium, et lesdits moyens d'addition comprennent soixante-dix pour cent de nitrure de zirconium, dix pour cent de nitrure d'hafnium et dix pour cent de nitrure de neptunium ou dix pour cent de nitrure d'américium.

11. Procédé de fabrication d'un élément de combustible pour un réacteur nucléaire, comprenant:
réaliser un combustible nucléaire comprenant du combustible à nitrure d'uranium modifié ou à nitrure de plutonium modifié; et
ajouter des nitrures incluant le nitrure d'hafnium audit combustible nucléaire.

12. Procédé de fabrication d'un élément de combustible selon la revendication 11, dans lequel ledit combustible nucléaire comprend dix pour cent d'uranium-235 et incluant quarante pour cent d'uranium-238, et ladite étape d'addition de nitrures audit combustible nucléaire comprend l'addition de quarante pour cent de nitrure de zirconium et de dix pour cent de nitrure d'hafnium audit élément de combustible.

13. Procédé de fabrication d'un élément de combustible selon la revendication 11, dans lequel ledit combustible nucléaire comprend dix pour cent de plutonium et incluant soixante-dix pour cent d'uranium-238, et ladite étape d'addition de nitrure audit combustible nucléaire comprend l'addition de dix pour cent de nitrure de zirconium et de dix pour cent de nitrure d'hafnium audit élément de combustible.

14. Procédé de fabrication d'un élément de combustible selon la revendication 11, dans lequel ledit combustible nucléaire comprend dix pour cent d'un mélange d'uranium-233 et d'uranium-235, et ladite étape d'addition de nitrures audit combustible nucléaire comprend l'addition de soixante-dix pour cent de nitrure de thorium, dix pour cent de nitrure de zirconium et dix pour cent de nitrure d'hafnium audit élément de combustible.

15. Procédé de fabrication d'un élément de combustible selon la revendication 11, dans lequel ledit combustible nucléaire comprend dix pour cent de plutonium, et ladite étape d'addition de nitrures audit combustible nucléaire comprend l'addition de soixante-dix pour cent de nitrure de zirconium, de dix pour cent de nitrure d'hafnium et de dix pour cent de nitrure de neptunium ou de dix pour cent de nitrure d'americium audit élément de combustible.
